# EUROPEAN PATENT APPLICATION

(11) **EP 3 936 913 A1**
(43) Date of publication of application: **12.01.2022**
(21) Application number: 20185296.9
(22) Date of filing: 10.07.2020
(51) Int. Cl.: G02B 6/38, G02B 6/44

(54) **FIBER-OPTIC APPARATUS**

(71) Applicant: Corning Research & Development Corporation, Corning, New York 14831 (US)
(72) Inventor: Alnajjar, Ghassan Mahmoud, 11165 Amman (JO); Michal, Ruda, 95-060 Brzeziny (PL)
(74) Representative: Sadler, Peter Frederick

(57) **Abstract**

A fiber-optic apparatus is disclosed, comprising a first enclosed portion and a second enclosed portion, the first enclosed portion and second enclosed portion each containing an optical splitter portion configured to retain one or more optical splitters and/or an optical fiber splice portion configured to retain one or more optical fiber splices, the first and second enclosed portions for containing fiber-optic components; a first access means for accessing the first enclosed portion and a second access means for accessing the second enclosed portion, whereby the first and second enclosed portions are independently accessible; at least one opening for a first fiber-optic cable to pass into the first enclosed portion from the exterior of the apparatus and at least one opening for a second fiber-optic cable to pass into the second enclosed portion from the exterior of the apparatus; connection means between the first enclosed portion and the second enclosed portion for forming an optical path between one or more optical fibers in the first enclosed portion and one or more optical fibers in the second enclosed portion; and one or more trays within at least one of the first enclosed portion and the second enclosed portions, the one or more trays having the optical splitter portions and/or optical fiber splice portions of the apparatus disposed thereon.

## Description

### TECHNICAL FIELD

This disclosure relates to the field of passive optical hardware and fiber-optic apparatuses. In particular the technology of the disclosure relates to fiber optic apparatuses for managing and connecting fiber optic cables, including fiber optic termination equipment that provides high fiber optic cable packing density and managed fiber routing.

### BACKGROUND

Fiber-optic networks allow information to be transmitted via optical signals transmitted through special glass cables known as optical fibers. Compared with traditional copper wiring, optical fibers allow transmission over greater distances with substantially less signal loss, provide a greater bandwidth, and do not suffer from electrical interference. Fiber-optic networks are particularly useful when providing long-distance communication and high bandwidth, so called "super-fast", broadband internet.

Typically, in a fiber-optic network, a fiber-optic cable is run from the network operator to a consumer premises (an outside plant, or OSP, cable). At the consumer premises, this cable is then split into a number of separate fiber-optic cables, each providing a network connection (inside plant, or ISP, cables). Typically, this is done using a fiber-optic splitter, also known as an optical splitter or a beam splitter. Exemplary beam splitters may divide a single input signal into 2, 4, 8, 16, or 32 output signals, and are known as 1x2, 1x4, 1x8, 1x16, and 1x32 splitters respectively.

The outputs of the beam splitters are typically for supplying individual consumer premises. For example, in this manner a fiber-optic broadband provider may lay a single fiber-optic cable to service a group of houses or business on a road or to service a block of flats. This cable may terminate in a street cabinet or wall terminal where the cable is split into a number of consumer cables for servicing each individual house, business or flat.

To provide flexibility, for example because the number of premises subscribed to the fiber-optic broadband provider may change, the output fibers of the beam splitter are usually connected to the consumer fibers via fiber-optic connectors or connector adaptors. Many standard connector types exist, such as SC, LC, and MTO connectors. These connections also occur within the street cabinet or wall terminal, and allow an engineer to quickly connect or disconnect individual consumer cables with the fiber-optic network.

Such cabinets and wall terminals that exist in the art have a number of drawbacks. They are often large and not compact, while providing poor access for engineers needing to work on the cables (e.g. to splice or connect fibers) within. Such cabinets provide a low-density solution for cable routing as compared to the cabinet size. Additionally, once installed, the OSP cable usually needs to be accessed or serviced infrequently. The consumer ISP cables, on the other hand, usually require more frequent access. For example, this may be to connect new users or disconnect old users. However, each time the ISP cables are accessed there is a risk that the engineer may mistakenly disturb or disconnect the OSP cables, or that dust, water or other contaminants may ingress and damage the OSP cables.

### SUMMARY OF INVENTION

The invention is defined in the independent claims, to which the reader is now directed. Preferred or advantageous features are set out in the dependent claims.

According to a first aspect of the invention, a fiber-optic apparatus is provided. The fiber-optic apparatus comprises: a first enclosed portion and a second enclosed portion, the first and second enclosed portions for containing fiber-optic components; a first access means for accessing the first enclosed portion and a second access means for accessing the second enclosed portion, whereby the first and second enclosed portions are independently accessible; at least one opening for a first fiber-optic cable to pass into the first enclosed portion from the exterior of the apparatus and at least one opening for a second fiber-optic cable to pass into the second enclosed portion from the exterior of the apparatus; and connection means between the first enclosed portion and the second enclosed portion for forming an optical path between one or more optical fibers in the first enclosed portion and one or more optical fibers in the second enclosed portion.

This provides an apparatus with two compartments that have an interface to patch optical fibres across. The two enclosed portions can be optically connected. This can be achieved by the connection means for optically connecting one or more optical fibers from the first fiber-optic cable with one or more optical fibers from the second fiber-optic cable between the first enclosed portion and the second enclosed portion. The optical connection may be via one or more intermediate connections such as one or more splices or splitter components. At the same time, the two enclosed portions are separate and individually accessible, being physically isolated from one another. This is advantageous as it prevents damage or contamination of the cables and fibers in one enclosed portion (e.g. an OSP portion) when cables in the other enclosed portion (e.g. an ISP portion) are accessed or serviced. It also reduces the chance that an engineer may mix up cables or otherwise make a mistake when working on cables or fibers in one enclosed portion.

Optionally, the first enclosed portion contains one or more retaining portions for retaining optical connections between optical fibers within the first enclosed portion and the second enclosed portion contains one or more retaining portions for retaining optical connections between optical fibers within the second enclosed portion.

These retaining portions advantageously secure optical connections and enable the apparatus to house and protect optical connections. Furthermore, such portions also help to keep the cables and optical fibers within the apparatus organised and tidy, increasing cable or fiber density and reducing the likelihood of operator error when working on the cables and fibers within the apparatus.

Optionally, each of the one or more retaining portions for retaining optical connections between optical fibers within the first enclosed portion and within the second enclosed portion are configured to retain one or more optical splitters or one or more optical fiber splices. These portions may be distributed equally in each enclosed portion, or each enclosed portion may have a different number of retaining portions (including no retaining portions).

Optionally, the first enclosed portion contains an optical splitter portion configured to retain one or more optical splitters and/or an optical fiber splice portion configured to retain one or more optical fiber splices. Optionally the second enclosed portion contains an optical splitter portion configured to retain one or more optical splitters and/or an optical fiber splice portion configured to retain one or more optical fiber splices.

It may be desired in some situations that the first compartment comprises at least a splitter portion and the second compartment comprises at least a splicing portion. It may be desired that the first compartment also comprises a splicing portion. This would allow an OSP cable to be spliced to an optical splitter in the first compartment to produce a number of separate OSP fibers which are then connected across the connection means to connectors in the second compartment which are in turn spliced onto a plurality of ISP cables, fulfilling the common use case described previously of servicing residential houses or flats.

Optionally, the optical splitter portions and/or optical fiber splice portions of the apparatus are disposed upon one or more trays within at least one of the first enclosed portion and the second enclosed portions.

A single tray in the apparatus, or in each enclosed portion, may be used. Alternatively, other numbers of trays may be used. Various combinations of trays and splice/splitter portions are contemplated depending upon the requirements of a specific use case. The trays are advantageous as they allow space to be better utilised, leading to a more compact apparatus.

Optionally, the apparatus comprises at least one tray within the first enclosure and at least one tray within the second enclosure. The trays used in each enclosure may be identical, such that each side is a mirror image of the other. Identical trays on either side means that the apparatus is more flexible, not restricting either side to a particular use and allowing whichever side is most convenient in a given scenario to be used. This also ensures a limited number of unique/overall components are used, leading to product simplicity.

There may be only one tray in the first enclosure and only one tray in the second enclosure. Having one tray in each enclosure keeps the apparatus compact.

Optionally, the one or more trays each comprise a first surface and a second surface, each surface having disposed thereon either an optical splitter portion or a splice portion.

Each tray side being useable for a different function allows the apparatus to be more compact. In particular, It can be advantageous to have each tray surface being different sides of the same tray plane or extension.

Optionally, the one or more trays have an optical splitter portion disposed upon the first surface and an optical fiber splice portion disposed upon the second surface.

Having different sides of the trays serving different functional purposes makes the apparatus more compact than existing solutions as it allows a single tray to serve different uses depending upon the need of a particular application. This is particularly advantageous when every tray is identical, as this reduces the number of distinct components in the apparatus, simplifying manufacture and ease of upkeep (for example, if a tray needed replacing the engineer would not need to worry about obtaining the correct type of tray).

Optionally, the one or more trays comprise transferring means for passing an optical fiber from the first surface to the second surface or from the second surface to the first surface.

Such a transferring means allows both sides of a tray to be safely used without damage to the optical fiber(s). The transferring means may be a means for passing, channelling or routing an optical fiber from one side to the other, for example, such as a channel, cutaway, recess, aperture, hole etc. The transferring means may be located towards an edge of the tray.

Optionally, each of the one or more trays may comprise a first portion and a second portion, the first portion being substantially planar and comprising the first and second surfaces, the second portion configured to support the first portion within one of the enclosed portions. Optionally, the second portion supports the first portion away from the bottom and/or rear of the apparatus. Each tray may have an "L" shaped cross section, optionally with a curved surface between the planes.

Optionally, the second portion extends in a direction perpendicular to the plane of the first portion. In particular, the second portion may be curved.

Optionally, the radius of curvature of the second portion is greater than or equal to approximately 5mm. Generally, the radius of curvature of the second portion may be greater than or equal to the safe bending curvature of an optical fiber to be used with the fiber-optic apparatus. The radius of curvature may be 10mm or greater, 15mm or greater, 20mm or greater or 30mm or greater. Particular values for the radius of curvature may be 10mm, 15mm, 20mm or 30mm, or thereabouts.

Optionally, the angle through which the second portion curves is equal to or approximately 90 degrees.

Such curved trays are advantageous because such a curve enables safer cable routing since optical fibers will be damaged if bent too sharply. In addition, due to the curvature, when the apparatus is opened up for access a larger opening is presented for an engineer when compared with flat panels.

Optionally, either one or both of the first and second enclosed portions contain one or more overlength cable storage portions configured to retain coils of excess optical fiber.

Such overlength cable storage portions have the advantage of enabling better cable management. Such overlength cable storage portions can be used to store lengths of fiber-optic cable as well as optical fibers.

Optionally, the one or more overlength cable storage portions are disposed on the one or more trays.

This is advantageous as placing the overlength cable storage portions on the trays means that space can be kept to a minimum and the overlength cable storage portions can be placed near to the optical splitter and/or fiber-optic splice portions for ease of use/adjustment.

Optionally, the one or more overlength cable storage portions are disposed adjacent to the at least one of the optical splitter portions and optical fiber splice portions.

Placing the overlength cable portions adjacent to the optical fiber splice or optical splitter portions means that the splices can be easily adjusted if necessary, for example if a splice needs to be redone. This ensures that the input and output lengths of fiber to/from a splitter can be easily managed.

Optionally, the one or more trays are attached to the fiber-optic apparatus by a hinge, the hinge being located at, or near, an edge of the tray. Optionally the hinge is integrated with the tray. Optionally the hinge is used to connect the tray to the inner side of the housing cover or access means.

The hinge has the advantage that the trays can fold closed for compactness and open up for ease of access. The hinge may be located on the second portion of the tray, or on the edge of the curved portion that is opposite to the substantially planar portion upon which the optical splitter and/or optical fiber splice portions are provided.

Optionally, the one or more trays comprise a cable routing portion adjacent to the hinge for routing fiber-optical cables or optical fibers, the cable routing portion disposed parallel to the hinge.

Locating the cable routing portion near to the hinge means that there is minimal movement or displacement of fiber-optic cables and/or optical fibers running through the routing portion as the tray is opened/closed. This reduces the strain placed on the cable and/or optical fibers as the tray is opened and closed. The cable routing portion may comprise one or more routing guides in the form of hooks for example.

Optionally, the first access means and the second access means comprise first and second hinged doors respectively, the hinges of the hinged doors being parallel to and adjacent the hinges of the trays.

Optionally, the hinges of the hinged doors are colinear with the hinges of the trays.

An arrangement of the trays and the doors (either with adjacent and parallel hinges or colinear hinges) allows the trays to fold out when the doors are opened. This allows the apparatus to remain compact when in a closed state but to open up for ease of access when necessary.

Optionally, the first and second hinged doors conform to the shape of the trays.

Having the doors, or more generally the first and second access means, conform to the shape of the trays enables the apparatus to remain compact.

Optionally, the first door is held closed by a first locking means and the second door is held closed by a second locking means, wherein the second locking means is different from the first locking means.

This is advantageous because the use of different locks reduces the likelihood that the wrong side is opened, and can even make it impossible to do so. This protects the cables on that side and reduces the risk of error of an engineer.

Optionally, the means for optically connecting one or more optical fibers from the first fiber-optic cable with one or more optical fibers from the second fiber-optic cable between the first enclosed portion and the second enclosed portion comprises at least one fiber-optic connector or fiber-optic connector adaptor for coupling two fiber-optic connectors.

Having the connecting means be a fiber-optic connector or fiber-optic connector adaptor allows optical fibers to easily be connected and disconnected as needed. This increases the usability and flexibility of the apparatus, allowing adjustments to the connected cables and fibers to easily be made. In particular, using connectors or connector adaptors can allow optical connections to be made or broken without the use of additional equipment, as would be required when making a splice, for example.

Optionally, the at least one fiber-optic connector or fiber-optic connector adaptor is configured to provide a non-permanent optical coupling between the one or more optical fibers from the first fiber-optic cable with one or more optical fibers from the second fiber-optic cable.

Such a non-permanent coupling again increases the flexibility and ease of use of the apparatus by allowing fibers to be connected and disconnected easily and as necessary.

Optionally, the first and second portions are separated by a dividing wall, and the at least one fiber-optic connector or fiber-optic connector adaptor are configured to optically connect the one or more optical fibers from the first fiber-optic cable with one or more optical fibers from the second fiber-optic cable across the dividing wall.

Having the first and second enclosed portions separated by a dividing wall prevents contamination between the enclosed portions. For example, if one enclosed portion is accessed then the dividing wall will prevent dirt or other contaminants from entering the other enclosed portion. Furthermore, using a dividing wall provides an easy and simple way to mount the connection means, for example by providing fiber-optic connector adaptors across the dividing wall.

Optionally, the first enclosed portion is a mirror image of the second enclosed portion with the dividing wall being the line of symmetry.

Having the apparatus have such symmetry has advantages such as flexibility (i.e. either side can be the consumer/operator (or ISP/OSP) side) and ease of manufacture (due to a reduction in the number of different components required), and so on.

Optionally, the apparatus is weather sealed. The weather sealing may be provided by sealing means located between the first and second access means and the main body of the apparatus. The sealing means may be in the form of a first sealing means located at the intersection between the main body of the apparatus 100 and the access means. This may also optionally include sealing means located at the hinge between the access means and the main body of the apparatus, in embodiments where a hinge is used. The sealing means may further comprise a second sealing means provided between the first and second access means for independently engaging each of the first and second access means when in their closed positions. The sealing means may be any appropriate sealing material, such as a rubber seal.

According to a second aspect of the invention, a tray for use in the fiber-optic apparatus of the first aspect is provided.

The tray comprises a first surface and a second surface, wherein one or both of the first surface and the second surface have disposed thereon one or more of an optical splitter portion configured to retain one or more optical splitters and an optical fiber splice portion configured to retain one or more optical fiber splices.

Such a tray provides a convenient and flexible way to manage and store optical fibers and fiber-optic components for use within a fiber-optic apparatus. Such trays allow a fiber-optic apparatus, in which the tray is installed, to be made more compact, while retaining the same functionality and accessibility.

Optionally, the tray comprises a first portion and a second portion, the first portion being substantially planar and comprising the first and second surfaces and the second portion configured to support the first portion when the tray is installed within a fiber-optic apparatus.

Optionally, the second portion extends in a direction perpendicular to the plane of the first portion.

Optionally, the second portion is curved.

Optionally, the second portion is configured to support the first portion away from the bottom/rear of an apparatus when the tray is installed within a fiber-optic apparatus.

Optionally, the radius of curvature of the second portion is greater than or equal to approximately 5mm. Generally, the radius of curvature of the second portion may be greater than or equal to the safe bending curvature of an optical fiber to be used with the fiber-optic apparatus. The radius of curvature may be 10mm or greater, 15mm or greater, 20mm or greater or 30mm or greater. Particular values for the radius of curvature may be 10mm, 15mm, 20mm or 30mm, or thereabouts.

Optionally, the angle through which the second portion curves is equal to or approximately 90 degrees.

Such curved trays are advantageous because such a curve enables safer cable routing (i.e. optical fibers/cables will be damaged if bent too sharply) and also because when an apparatus within which such a tray is installed is opened up for access it presents a larger opening for an engineer, when compared with flat panels.

Optionally, the tray has disposed thereon one or more overlength cable storage portions configured to retain coils of excess optical fiber.

Such overlength cable storage portions have the advantage of enabling better cable management. Such overlength cable storage portions can be used to store lengths of fiber-optic cable as well as optical fibers.

Optionally, the one or more overlength cable storage portion is disposed adjacent to at least one of the one or more of an optical splitter portions and an optical fiber splice portion.

Placing the overlength cable portions adjacent to splice or splitter portions means that the optical fibers can be easily adjusted if necessary - for example if a splice needs to be redone.

Optionally, the tray is configured to attach to the fiber-optic apparatus by a hinge. The hinge may be integral to the tray.

This has the advantage that when installed the trays can fold closed for compactness and open up for ease of access when installed in a fiber-optic apparatus. The hinge may be located on the second portion, or on the edge of the curved portion that is opposite to the substantially planar portion supporting the optical splitter and/or optical fiber splice portions thereon.

Optionally, the tray comprises a cable routing portion proximate or adjacent to the hinge for routing fiber-optical cables, the cable routing portion disposed parallel to the hinge.

Keeping the cable routing near to the hinge means that there is minimal movement as the tray is opened/closed. This means that there is minimal strain on the cable. The cable routing portion may comprise one or more routing guides in the form of hooks (for example).

Additional features and advantages will be set forth in the detailed description which follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

Figure 1 illustrates an external view of an exemplary fiber-optic apparatus according to the embodiments of the present invention.
Figure 2 illustrates an internal view of an exemplary fiber-optic apparatus according to embodiments of the present invention.
Figure 3 illustrates an internal view of an exemplary fiber-optic apparatus according to embodiments of the present invention with an illustrative example of weather sealing.
Figure 4 illustrates a first view of an exemplary tray for use in a fiber-optic apparatus according to embodiments of the present disclosure.
Figure 5 illustrates a second view of an exemplary tray for use in a fiber-optic apparatus according to embodiments of the present disclosure.
Figure 6 illustrates a first view of an exemplary fiber-optic apparatus according to embodiments of the present invention including an example optical fiber route within the apparatus.
Figure 7 illustrates a second view of an exemplary fiber-optic apparatus according to embodiments of the present invention including an example optical fiber route within the apparatus.

### DETAILED DESCRIPTION OF THE INVENTION

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

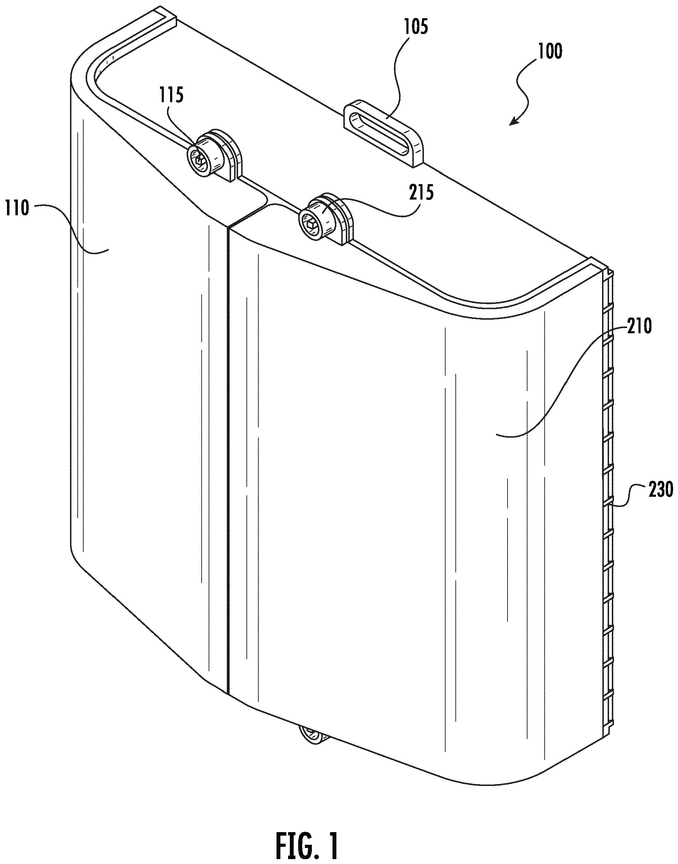

Figure 1 shows an exterior view of an exemplary fiber-optic apparatus 100 according to an embodiment. The apparatus 100 has a first access means 110 which allows access to a first enclosed portion and a second access means 210 which allows access to a second enclosed portion. In this example, the first and second access means 110, 210 are doors connected to the apparatus by hinges 130, 230, though other types of access means could be provided. For example, instead of hinged doors, sliding panels could be used, or completely removable panels could be used, or rotatable panels could be used. It is also contemplated that different types of door could be used for the first access means and the second access means.

Preferably, the first access means 110 and the second access means 210 are provided on the same surface of the apparatus 100. That is, preferably they can both be accessed from the same direction. For example, if the apparatus 100 is mounted on a wall then first access means 110 and second access means 210 can both be accessed from the front of the apparatus. Therefore an engineer standing in front of the device can access both enclosed portions.

Preferably, the first and second access means 110, 210 are secured by a first lock 115 and a second lock 215 respectively. Locks 115, 215 prevent unauthorised access to the fiber-optic apparatus, preventing theft of equipment, tampering with equipment, or other damage. In addition, the locks 115, 215 help prevent the access means 110, 210 from opening inadvertently and exposing the first and second enclosed portions to detrimental environmental effects, such as dust and rain.

The first lock 115 and the second lock 215 may be any type of suitable lock. For example, they may require a key, a code, or other type of input or verification. Optionally the first lock 115 and the second lock 215 are different. That is, a different key or code is needed for the first lock 115 compared with the second lock 215. In Figure 1, for example, it can be seen that the first lock 115 requires a triangular key whereas the second lock 215 requires a square key. Having different locks is advantageous because it prevents unauthorised and erroneous access to the wrong enclosed portion. For example, if a fiber-optic engineer only needs to access one enclosed portion to complete their work then they can be given only the key to the enclosed portion they need to access. Furthermore, it means that the cabling in the portion that does not need to be accessed is not unnecessarily exposed to detrimental environmental effects, such as dust and rain.

The apparatus shown in Figure 1 also has a wall mount 105, allowing the apparatus to be mounted on a wall. The type of wall mount 105 may vary depending upon the application, and in some embodiments the apparatus may not be equipped with a wall mount 105 at all. For example, in some embodiments the apparatus may be configured to be freestanding, in which case a wall mount 105 is not required. If a wall mount 105 is present, it may be in the form of holes for screws, or it may comprise a clip or latching mechanism configured to be attached to a complimentary portion that is affixed to a wall. The form of the wall mount 105 is not limited in the present disclosure.

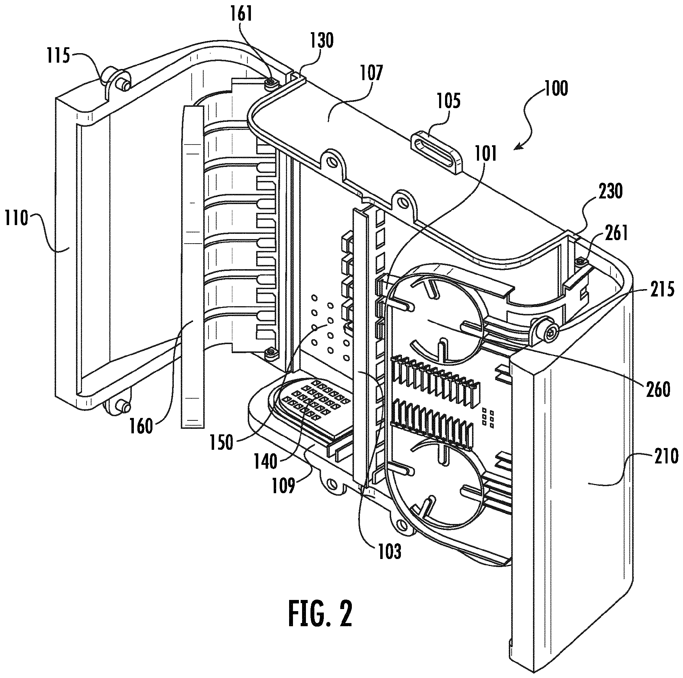

Figure 2 shows an interior view of the fiber-optic apparatus shown in Figure 1. In this view, the first and second doors 110, 210 are shown in an open position. This view reveals the interior of the first and second enclosed portions. In the illustrated embodiment, the first enclosed portion is formed between the back wall, the top wall 107, the bottom wall 109, the dividing wall 103 and the first access means 110. In the illustrated embodiment, the second enclosed portion is formed between the back wall, the top wall 107, the bottom wall 109, the dividing wall 103 and the second access means 210. In Figure 2, the first and second enclosed portions are generally cuboid in shape. However, it will be appreciated that this is simply an exemplary shape and that the first enclosed portions may be formed by a different arrangement of walls and/or sides and may be different shapes and volumes. It is also noted that in Figure 2 the apparatus is broadly symmetric in nature about the dividing wall 103. In this case, the first enclosed portion and the second enclosed portion are mirror images of each other about the dividing wall 103. However, the present disclosure does not limit the apparatus to such symmetry. For the avoidance of doubt the symmetric nature of the apparatus may not include peripheral features such as the first lock 115 and the second lock 215.

In the bottom wall 109, at least one opening 140 is provided for a first fiber-optic cable to pass into the first enclosed portion from the exterior of the apparatus 100. A similar opening 240 is provided on the bottom wall 109 for a second fiber-optic cable to pass into the second enclosed portion from the exterior of the apparatus 100, though this opening 240 is not visible in Figure 2. It is noted that while these openings 140, 240 are in the bottom wall in this example, they could also be located in different locations, such is in the top wall 107, back wall, or even any side walls, and need not be located in the same wall or side.

The openings 140, 240 may have just one aperture for a single cable, or may have a number of different apertures for numerous cables. The size of the apertures may be dependent upon the cables that are to pass through the opening. For example, an opening 140, 240 that is intended to have a multicore cable may have a single large aperture. This can accommodate thicker multicore cables of the sort connecting to the OSP. An opening 140, 240 configured to accommodate a plurality of single core cables may have numerous smaller apertures. This can accommodate thinner single core cables from the ISP. In some embodiments, the opening 140, 240 may provide a single large aperture, and inserts can be inserted into the large aperture to provide the appropriate number and sizes of sub-apertures for the required application.

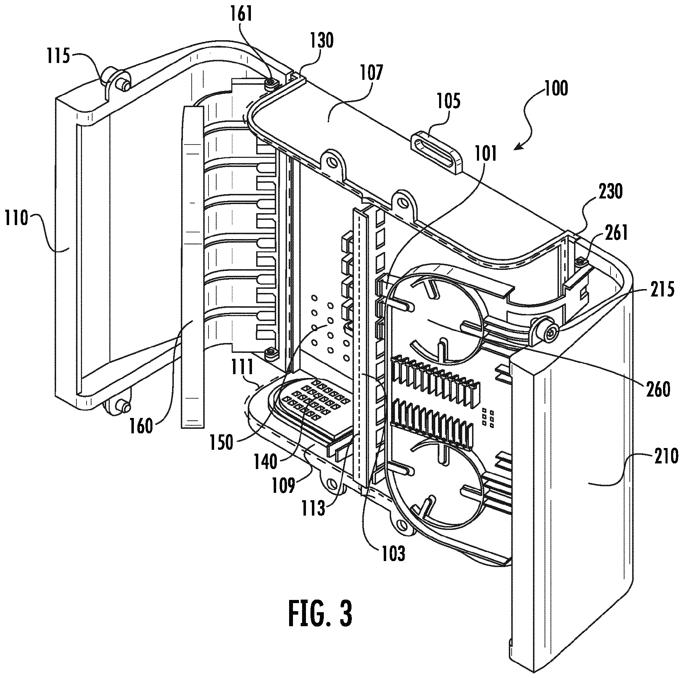

Optionally in some embodiments the apparatus 100 is weather sealed, to prevent moisture or dust or other environmental effects from entering the apparatus 100. Figure 3 shows an example of such an apparatus 100 using sealing means, located at the positions indicated by the dashed lines, to weather seal the interior of the apparatus. The apparatus 100 may have an IP55 rating or similar. In particular, the access means 110, 210 may be weather sealed and the openings 140, 240 may also optionally be weather sealed.

For example, the access means 110, 210 may be weather sealed using a first sealing means 111, such as a rubber seal, around the edge of the main body of the apparatus. The first sealing means may be located around the edges of the opening where the access means 110, 210 meet the apparatus 100 so as to form a seal when the access means are in their closed position. This may include sealing material located at the intersection between the main body of the apparatus 100 and the access means. This may also optionally include sealing means located at the hinge between the access means and the main body of the apparatus, in embodiments where a hinge is used. In some embodiments, the sealing may be provided on the access means 110, 210 as well as or instead of on the apparatus 100. Additionally or alternatively, a flange may be provided around the edge of access means 110, 210 or on the apparatus 100 to contribute to the weather sealing of the apparatus 100.

As well as apparatus 100 being weather sealed as a whole using the first sealing means, each enclosed portion may independently be weather sealed. That is to say, even if one of the enclosed portions is accessed via access means 110, 210, the other enclosed portion that is not accessed may remain weather sealed. For example, a second sealing means may be provided between the first and second access means for independently engaging each of the first and second access means 110, 210 when in their closed positions. For example, a dividing wall 103 may be provided with second sealing means, such as a sealing member 113, which engages with access means 110, 210 to separately and/or independently weather seal each enclosed portion. Again, the second sealing means may be located on the on the access means 110, 210 as well as or instead of on the apparatus 100. In some embodiments, the second sealing means may be a rubber seal.

The openings 140, 240 may also have some form of sealing. This sealing may form a seal around a cable passing through the opening, to prevent dust, moisture or other environmental effects from entering the first and second enclosed portions. For example, a seal may be provided through the use of a rubber washer or grommet or the like. This may form a friction fit around the cable, preventing ingress of dirt and moisture. Such a seal may also grip and hold the cable, preventing the weight of any cable hanging outside the apparatus 100 from applying a force upon the cable arrangement inside the apparatus. A cap, cover, plug or similar component may also be provided to cover or seal any parts of openings 140, 240 that do not have a cable passing through them during use, weather sealing those parts of openings 140, 240. For example, opening 140, 240 may have two apertures, each for passing one cable into the apparatus 100. If only one of those apertures were being used, the other may be covered with a cap.

Figure 2 also illustrates the connection means 101 between the first enclosed portion and the second enclosed portion for forming an optical path between one or more optical fibers (172) in the first enclosed portion and one or more optical fibers (272) in the second enclosed portion. Preferably, the connection means 101 provides a non-permanent connection. In the embodiment of Figure 2, the connection means 101 are a number of fiber-optic connector adaptors, though other means could be used, such as fiber-optic connectors. The fiber-optic connector adaptors illustrated provide a means for aligning and securing two fiber-optic connectors to provide an optical pathway from one connector to the other. Many suitable fiber-optic connectors and adaptors are known in the prior art, such as SC, LC, and MTO connectors. In Figure 2, the connection means 101 are shown as providing a connection across the dividing wall 103. While this is an advantageous embodiment because it allows an adaptor to directly connect a connector in the first and second enclosed portions, this is merely an illustrative example, and the connection could be provided in other ways. For example, a back wall of each enclosed portion may be adapted to receive a number of connectors in each enclosed portion, and the back wall may also comprise a number of optical fibers configured to complete the optical circuit between a connector connected in the first enclosed portion and one connected in the second enclosed portion.

At the rear of the apparatus 100 shown in Figure 2, each enclosed portion has a routing guide 150, 250 (not shown). The first routing guide 150 in the first portion and the second routing guide 250 in the second portion provide cable management within the apparatus 100. That is, the routing guides 150, 250 enable cables and/or optical fibers to be placed and retained to a required degree within the apparatus 100. This not only keeps the apparatus 100 tidy when it is in use, which reduces the likelihood of an engineer making a mistake when servicing the fibers within the apparatus 100, but also helps protect the fibers inside the apparatus 100 by ensuring that they follow safe curving or bending radii. This is particularly important with optical fibers in comparison to traditional copper wiring because, due to their glass construction, if an optical fiber bends too sharply, with too small a radius of curvature, it can be damaged. In Figure 2, the routing guides 150, 250 are shown as a series of holes into which loops can be placed for retaining optical fibers or cables as needed. The routing guides 150, 250 may take other forms, such as a series of pegs about which an optical fiber or cable can be curved and held in place. It will be appreciated that any appropriate type of routing guide may be used, and that combinations of types of routing guide may also be used as appropriate.

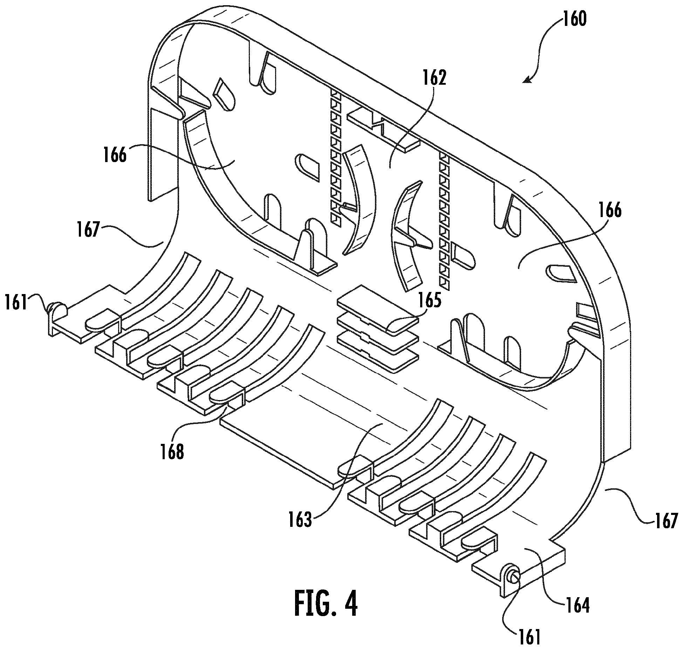

Also shown in the apparatus of Figure 2 are a pair of trays 160, 260. One tray 160 is disposed in the first enclosed portion and the other tray 260 is disposed in the second enclosed portion. The trays are described in more detail below in relation to Figures 3 and 4. The symmetric arrangement of trays as disclosed in Figure 2 may be advantageous in that it requires fewer distinct pieces, simplifying manufacture of the apparatus and reducing the associated costs. Flexibility of use can also be improved because each side does not need to be used in a specific manner. For example, either of the enclosed portions could be used as an OSP or ISP side depending upon the geometry of the installation site.

While two trays 160, 260 are shown in Figure 2, it is appreciated that a different number of trays may also be used instead, or even no trays may be present. If no trays are present, then the features described as being located on the trays in relation to Figures 3 and 4 may instead be located directly upon one of the walls or sides of the apparatus inside the first or second enclosed portions. If two or more trays are used, then each tray may each comprise every feature described in relation to Figures 3 and 4, or different trays may comprise different features. For example, each tray may comprise a different feature, or different combinations of features depending upon the requirements of a particular use case. Additionally, while Figure 2 shows an apparatus 100 with an identical tray 160, 260 within each enclosed portion, this need not necessarily be the case. In some embodiments, each enclosed portion may comprise a different tray (that is, a tray in the first enclosed portion may comprise a different feature or combination of features to a tray in the second enclosed portion). Furthermore, it is anticipated that the two enclosed portions may comprise a different number of trays, including no trays.

Figure 2 shows the trays 160, 260 attached to the apparatus 100 via hinges 161, 261. Specifically, in Figure 2, the trays 160, 260 are hinged to the doors 110, 210. Alternatively the tray hinges may be attached to one of the walls or a back plate of the apparatus 100. The hinges 130, 230, 161, 261 of the trays 160, 260 and of the doors 110, 210 may, for example, be parallel and adjacent, or may be co-linear. Using hinges 161, 261 allows the trays 160, 260 to fold inwards when not being used for access to the fiber optic components, meaning that the apparatus 100 can be made more compact.

The trays 160, 260 in the embodiment shown in Figure 2 have a curved shape with an broadly "L" shaped cross-section, as will be described further in relation to Figures 3 and 4. However, in Figure 2, it can be seen that the access means -the doors 110, 210 - conform to the shape of the trays. That is, they have a similar but enlarged cross-section, allowing them to nest snuggly when in a closed state. This further allows the apparatus 100 to be more compact when in a closed state, yet still allows sufficient access for an engineer needing to operate within the apparatus 100. It is noted that if multiple trays are located in either or both of the enclosed portions, they may all have a similar curved shapes, yet with different proportions allowing multiple trays to nest. Alternatively, the trays may be placed in a different arrangement, such as end to end with aligned, collinear hinges.

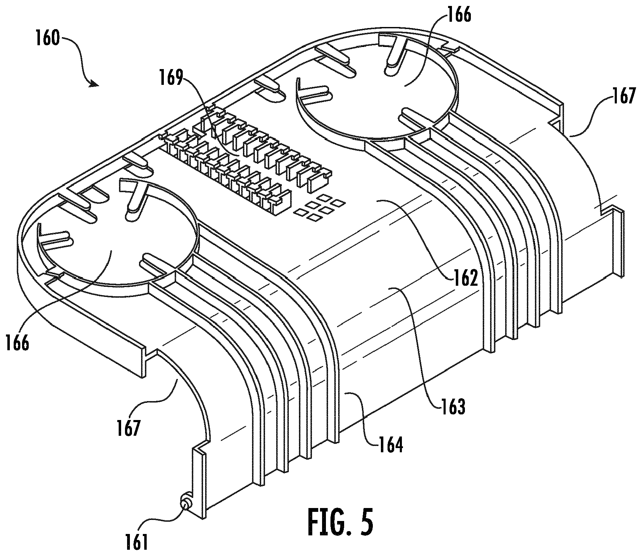

The trays 160, 260 will now be described further with reference to Figures 3 and 4. Figure 4 shows a first view of a tray 160, though it is noted that the following description equally applies to tray 260. Figure 5 shows a second view of the same tray 160.

The tray 160 comprises an optical splitter portion 165, visible in Figure 4, and an optical fiber splice portion 169, visible in Figure 5. The optical splitter portion 165 is configured to retain and/or secure an optical fiber beam splitter, which divides an optical fiber signal from a first number of optical fibers (typically one or two fibers) into a second number of optical fibers (for example two, four, eight, sixteen, or thirty two). The optical splitter portion 165 may be configured to retain and/or secure a single optical fiber beam splitter, or multiple optical fiber beam splitters.

The optical fiber splice portion 169 is configured to retain and/or secure an optical fiber splice. The optical fiber splice portion 169 may be configured to retain and/or secure a specific type or types of splice, or may be configured to retain and/or secure any type of splice. For example, the optical fiber splice portion 169 may be configured to retain and/or secure a mechanical splice and/or a fusion splice, either of which may or may not be in a protective casing to protect the splice. The optical fiber splice portion 169 may be configured to retain and/or secure a single optical fiber splice, or multiple optical fiber splices. Preferably, the optical fiber splice portion 169 is configured to retain and/or secure a number of optical fiber splices equal to the number of inputs to the optical fiber beam splitters retained and/or secured by the optical fiber beam splitter portion 165. For example, if the optical splitter portion 165 can retain and/or secure two optical fiber beam splitters, each capable of dividing a signal into eight, then the optical fiber splice portion 169 may be configured to retain and/or secure up to sixteen optical fiber splices.

As illustrated, an optical fiber splice portion 169 may disposed on one surface of a tray 160 and an optical splitter portion 165 may be disposed on the same or a different surface of the tray 160. Alternatively, each tray 160 may only have one of an optical splitter portion 165 and an optical fiber splice portion 169 disposed upon it. The present disclosure contemplates that the trays 160 may have any number and combination of optical splitter portions 165 and optical fiber splice portions 169 depending upon the requirements of a particular use case. However, it has been found that the illustrated tray 160 with an optical splitter portion 165 on a first surface, side or face, and an optical fiber splice portion 169 on a second surface, side or face that is opposite the first surface, side or face, is advantageous in its compactness and ability to fulfil a broad range of use case requirements.

It is noted that in embodiments of the present invention where trays 160, 260 are not present, optical splitter portions 165 and optical fiber splice portions 169 may be disposed elsewhere within the enclosed portions of the apparatus 100.

As previously discussed, tray 160 may attach to the apparatus 100 via hinge 161. This is advantageous because it allows for the apparatus 100 to fold into a more compact closed state, yet open up to give good accessibility, for example to an engineer needing to manage or install cables within apparatus 100. Running parallel and adjacent to hinge 161 is a cable routing portion 168. In the example shown in Figure 4, the cable routing portion 168 comprises a series of opposing hooks that guide, secure and/or retain optical fibers and/or cables. It is advantageous having cable routing portion 168 running parallel to and adjacent to hinge 161 because this minimises the movement of any optical fibers or cables travelling through cable routing portion 168 when the tray is moved about the hinge, for example when opening or closing it. This minimises the forces exerted on the optical fibers or cables, reducing the risk of damage.

As well as the cable routing portion 168 disposed adjacent to hinge 161, tray 160 may have other cable routing portions at other positions around the tray. For example, the tray may have cable routing portions adjacent to the optical splitter portion 165 or the optical fiber splice portion 169 in order to guide the optical fibers into those portions correctly, without excessive bending. Similarly, the tray 160 may have cable routing portions guiding optical fibers into or out of any overlength cable storage portions 166.

Overlength cable storage portions 166 can be used to store excess lengths of cable or optical fiber. For example, many splitters or connectors come with an attached length of optical fiber. This length is often more than required to attach to the incoming OSP or ISP cable via a splice, and so excess length can be coiled in an overlength cable storage portion 166. Tray 160 may have any number of overlength cable storage portions 166 depending upon the use requirements, though in the example illustrated in Figures 3 and 4 the tray 160 has four overlength cable storage portions 166, two on each side of the tray 160. This has been found to be advantageous because it provides a space to store excess length for the optical fibers either side of the splitter and the splices. It is also advantageous to have the overlength cable portions 166 located nearby or adjacent to the optical splitter portion 165 and/or the optical fiber splice portion 169 because it means that if, for example, a splice needs to be redone then the excess cable is easily accessible and the new splice can be made without having to reroute large portions of fiber. While in the present embodiment overlength cable storage portions 166 are shown only being located on the tray 160, some or all of the overlength cable storage portions 166 could be located on the main body of apparatus 100, for example upon a side wall or a back wall.

As noted previously, tray 160 can have different components, such as optical splitter portion 165, fiber-optic splice portion 169, and overlength cable storage portion 166, on both sides of the tray 160. In order to facilitate optical fibers passing from one side of the tray 160 to the other, the tray 160 may be provided with one or more transferring means 167 for passing an optical fiber from one side of the tray 160 to the other side of the tray 160, e.g. from a first surface to a second surface or from a second surface to a first surface. The transferring means 167 may comprise a channel or passage, and/or a cut away, opening, aperture, recess or other hole for passing an optical fiber or cable through from one side or surface to the other. In Figures 3 and 4, the transferring means 167 is disposed along two opposite edges of the tray 160. It can be advantageous to place the transferring means 167 at the edge of the tray 160 because this is often where cable will need to be routed from one side to the other, but the invention is not limited in this regard. It is contemplated that any number of transferring means 167 are provided, and that these may be located at any position and in any orientation on the tray 160 depending upon the particular requirements needing to be fulfilled. In the illustrated embodiment, the transferring means 167 are disposed upon a curved portion 163 of the tray 160.

Various shapes of tray 160 are contemplated in this disclosure. For example, a flat tray 160 may be used. That is to say, the tray 160 may be substantially disposed within a single plane. The tray 160 may also comprise multiple portions extending in different directions, such that overall the tray 160 is not substantially planar. For example, the tray 160 may comprise two portions, each portion being substantially planar but arranged such that the planes that each portion lies in are orthogonal to each other, giving a "corner" shaped or "L" shaped tray 160 when viewed from the side.

In Figure 4 and 4, a curved "L" shaped tray 160 is shown. In this embodiment, the tray comprises a first substantially planar portion 162 upon which the various components (such as optical splitter portion 165, optical fiber splice portion 169, and overlength cable management portions 166) are disposed as well as a curved portion 163. The curved portion 163 curves by approximately 90 degrees. This means that when viewed length-on, the tray 160 has a cross section similar to a curved "L". The curved portion 163 may curve by amounts other than 90 degrees. Other angles are contemplated, such as between 70 degrees and 100 degrees for example. Also shown in the illustrated embodiment is an optional further substantially planar portion 164 that extends from the end of the curved portion 163, so as to extend the bottom of the "L" shape.

Having such a curved shape has multiple benefits. Firstly, it allows for the apparatus 100 to remain compact when closed, but to permit access to all components on the tray when opened to provide a high level of accessibility, for example for an engineer working with cables or fibers within the apparatus 100. It also means that less stress is placed on the optical fibers as they bend round from within the enclosed portions of the apparatus and onto the tray 160. It is particularly advantageous if the radius of curvature of the curved portion 163 is greater than the safe bending radius of curvature of optical fibers to be used with the apparatus 100. For example, the radius of curvature of the curved portion 163 may be greater than or equal to 5mm, 10mm, 15mm, 20mm, or 30mm.

The shape of the substantially planar portion 162 is rectangular in the illustrated embodiment, though other shapes could be used, such as triangular or semi-circular trays.

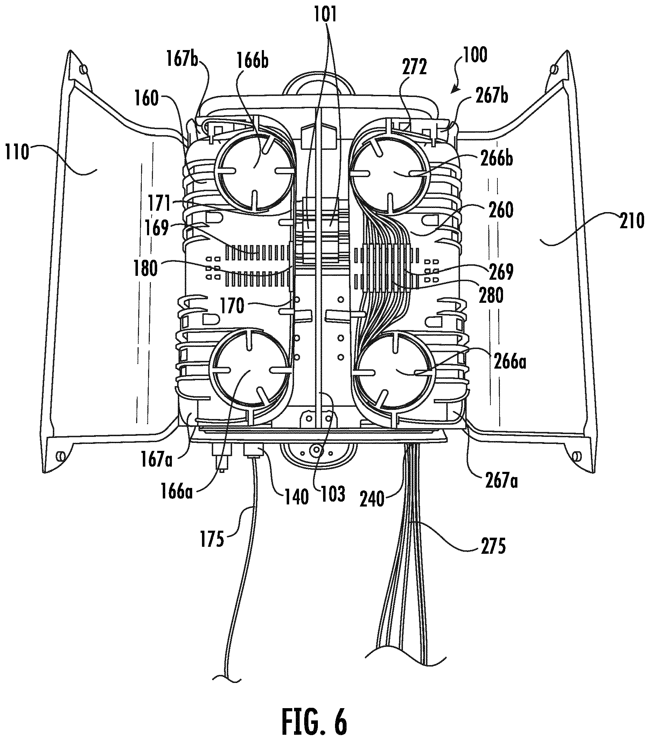

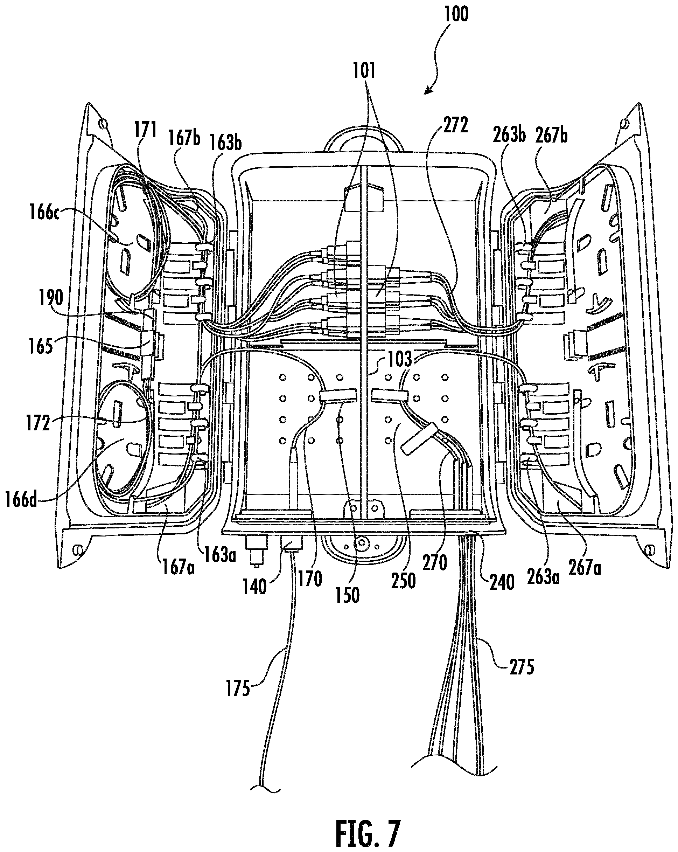

Figures 5 and 6 show an exemplary cable routing indicating how the apparatus 100 may be used. Figure 6 shows apparatus 100 with access means 110, 210 opened to expose the exterior surface of the trays 160, 260. Figure 7 then shows apparatus 100 with both access means 110, 210 opened and trays 160, 260 in an open position to show the interior of the first and second enclosed portions, as well as the interior surface of trays 160.

Beginning with Figure 7, an OSP cable 175 is shown entering the apparatus 100 via opening 140. Once inside the apparatus 100, the outer layers of OSP cable 175, such as the protective jacket, may be stripped back to expose the internal one or more optical fibers 170, which may still be protected by buffer tubes or similar.

The optical fibers 170 route through cable routing guide 150. The optical fibers may optionally make only a single bend when routing through cable routing guide 150. The optical fibers then pass onto a first surface of the tray 160 which, in this example, is the interior surface of the tray being the surface opposite the surface facing the access means 110, 210. The optical fibers then route through cable routing portion 163a, which may direct the optical fibers towards transferring means 167a located on an edge of the tray if splicing of the fibers is required. The optical fibers 170 then passes through transferring means 167a to pass to the opposing exterior surface of tray 160. Optionally, when passing through the transferring means the optical fibers make only a single bend.

Turning now to Figure 6, the optical fibers 170 then emerge from transferring means 167a on the second surface of tray 160, which in this example is the exterior surface facing the access means 110, 210. Spare length of fiber may be coiled and stored in the overlength cable storage portion 166a before routing into optical fiber splice portion 169. Here the one or more fibers 170 are spliced 180 onto corresponding one or more fibers 171. If fibers 171 have excess length then this may be stored on overlength cable storage portion 166b before passing back to the interior surface of tray 160 through transferring means 167b. Optionally, when passing through the transferring means the optical fibers make only a single bend.

Returning to Figure 7, fibers 171 emerge from transferring means 167b. Transferring means 167b may be located on the opposite edge of the tray to transferring means 167a. Further excess length may optionally be stored in overlength cable storage portion 166c.

The one or more optical fibers then enter optical splitter 190, which is retained in optical splitter portion 165. A plurality of separate optical fibers 172 emerge from optical splitter 190 as described above. Any excess length in fibers 172 may optionally be stored in overlength cable storage portion 166d, after which the fibers are routed via cable routing portion 163b. Subsequently, fibers 172 terminate in connection means 101.

Connection means 101 is used to pass the signal across dividing wall 103 from optical fibers 172 to optical fibers 272. While there may be a first number of optical fibers 172 connected to the connection means 101 in the first enclosed portion, there may be a different number of optical fibers 272 connected to the connection means 101 in the second enclosed portion. In particular the number of optical fibers connected to the connection means in the second enclosed portion may be lower than the number of optical fibers connected to the connection means in the first enclosed portion. This may be because while an incoming OSP cable has the capacity for eight consumers to be connected to it, only six have subscribed to the fiber-optic service. Having all eight potential connections be represented by fibers 172 and connected to connection means 101, however, means that if a new customer purchases the fiber-optic service then they can easily be added to the network by connecting a further fiber 272 to the connection means 101 in the second enclosed portion without having to access the first enclosed portion.

Optical fibers 272 pass from the connection means 101 onto the second tray 260 and into cable routing portion 263b before passing to the exterior surface of tray 260 via transferring means 267b.

Now looking at Figure 6 again, fibers 272 pass from transferring means 267b to overlength cable storage portion 266b where excess fiber length is stored. Optionally, when passing through the transferring means the optical fibers make only a single bend. From here, fibers 272 enter optical fiber splice portion 269 whereby each of the one or more fibers 272 are spliced 280 to a respective optical fiber 270. These fibers 270 may have excess length coiled in overlength cable storage portion 266a, after which they pass through transferring means 267a back to the interior surface of tray 260. Optionally, when passing through the transferring means the optical fibers make only a single bend.

Finally, returning to Figure 7 once again, optical fibers 270 pass through cable routing portion 263a and cable routing guide 250. Optionally, when passing through the cable routing guide the optical fibers make only a single bend. Subsequently, the cables or fibers 270 may converge, regaining various protective layers, to form cables 275 and then leave the apparatus 100 through opening 240. In this example, the cables leaving the opening are individual ISP cables, although they may be multicore fiber cables or any other type of cable for making an optical connection with fiber optic equipment in the customer premises.

The disclosure of this documents, therefore, provides an innovative approach to the design of an apparatus that can provide a secure and clean work environment for optical fiber components, while at the same time offering uniquely high density of optical components and fittings compared to the state of the art. Particular advantages that may be present for certain embodiments include a relatively small size of the apparatus compared to the number of connections and/or optical components it can house, clear separation between the two enclosed portions (e.g. between an OSP and an ISP section), different locking features for the two enclosed portions, a single common interface between the two enclosed portions, a clean work environment with a high level of access to each functional area of the apparatus, and a limited number of unique or distinct components simplifying manufacture and maintenance.

In some embodiments, one of the innovative features that expands the capabilities of the apparatus beyond that of the state of the art are the "L" shaped trays. In particular, these trays may have the shape of the letter "L", with two planes angled 90 degrees from one another and having two sides. Each side may have specific functionality. The two planes may be joined by a curved portion. In particular, the edge where the planes meet may be rounded to a smooth bend in order to not damage optical fibers or cables running over/around the edge. All fiber routing disposed on the trays may provide a safe bending radius so as not to harm optical cables or fibers.

In some embodiments, the first side of such a tray may have the following functionality: fiber overlength area(s) with routing direction change; portions for retaining and/or securing 2 optical splitters; near-hinge fiber routing pathway(s); fiber gateway(s) for first side to second side cable/fiber transfer

In some embodiments, the second side of such a tray may have the following functionality: splicing area(s) for retaining and/or securing either 12 or 24 splices; near-hinge fiber routing pathway(s); fiber gateway(s) for second side to first side cable/fiber transfer.

In these embodiments the splice tray may also have an integrated hinge that is used to connect the tray to the inner side of the apparatus, for example upon the inner side of the access means.

As used herein, the terms "fiber-optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

It is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A fiber-optic apparatus (100) comprising:
a first enclosed portion and a second enclosed portion, the first enclosed portion and second enclosed portion each containing an optical splitter portion (165) configured to retain one or more optical splitters (190) and/or an optical fiber splice portion (169) configured to retain one or more optical fiber splices (180);
a first access means (110) for accessing the first enclosed portion and a second access means (210) for accessing the second enclosed portion, whereby the first and second enclosed portions are independently accessible;
at least one opening (140) for a first fiber-optic cable to pass into the first enclosed portion from the exterior of the apparatus (100) and at least one opening (240) for a second fiber-optic cable to pass into the second enclosed portion from the exterior of the apparatus (100);
connection means (101) between the first enclosed portion and the second enclosed portion for forming an optical path between one or more optical fibers (172) in the first enclosed portion and one or more optical fibers (272) in the second enclosed portion; and
one or more trays (160, 260) within at least one of the first enclosed portion and the second enclosed portions, the one or more trays (160, 260) having the optical splitter portions (165, 265) and/or optical fiber splice portions (169, 269) of the apparatus (100) disposed thereon.

2. The fiber-optic apparatus (100) of claim 1, wherein the apparatus (100) comprises at least one tray (160) within the first enclosure portion and at least one tray (260) within the second enclosure portion.

3. The fiber-optic apparatus (100) of claim 2, wherein each tray (160, 260) comprises a first surface and a second surface, wherein the trays have an optical splitter portion (165, 265) disposed upon the first surface and an optical fiber splice portion (169, 269) disposed upon the second surface.

4. The fiber-optic apparatus (100) of claim 2 or 3, wherein each tray (160, 260) comprises transferring means (167, 267) for passing an optical fiber from the first surface to the second surface or from the second surface to the first surface.

5. The fiber-optic apparatus (100) of any of claims 2 to 4, wherein each tray (160, 260) comprises a first portion (162) and a second portion (163), the first portion (162) being substantially planar and comprising the first and second surfaces and the second portion (163) configured to support the first portion (162) within the enclosed portion.

6. The fiber-optic apparatus (100) of claim 5, wherein the second portion (163) is curved to accommodate bending of optical fibers routing from between the first (162) and second (163) portions, the radius of curvature of the second portion (163) being greater than or equal to 5mm, and the angle through which the second portion (163) curves being approximately 90 degrees.

7. The fiber-optic apparatus (100) of any of claims 1 to 6, wherein each tray (160, 260) comprises one or more overlength cable storage portions (166, 266) configured to retain coils of excess optical fiber.

8. The fiber-optic apparatus (100) of claim 7, wherein the one or more overlength cable storage portions (166, 266) are disposed adjacent to the one or more optical splitter portions (165, 265) and optical fiber splice portions (169, 269).

9. The fiber-optic apparatus (100) of any of claims 1 to 8, wherein each tray (160, 260) is attached to the fiber-optic apparatus (100) by a hinge (161, 261), the hinge (161, 261) being located at or adjacent to an edge of the tray (160, 260).

10. The fiber-optic apparatus (100) of claim 9, wherein each tray (160, 260) comprises a cable routing portion (163, 263) adjacent to the hinge (161, 261) for routing fiber-optical cables, the cable routing portion (163, 263) disposed parallel to the hinge (161, 261).

11. The fiber-optic apparatus (100) of claim 9 or 10, wherein the first access means (110) and the second access means (210) comprise first and second hinged doors respectively, wherein the hinged doors comprise hinges (130, 230) that are parallel to and adjacent the hinges (161, 261) of the trays (160, 260), and wherein the first and second hinged doors conform to the shape of the trays (160, 260).

12. The fiber-optic apparatus (100) of any preceding claim, wherein the connection means (101) between the first enclosed portion and the second enclosed portion for forming an optical path between one or more optical fibers (172) in the first enclosed portion and one or more optical fibers (272) in the second enclosed portion comprises at least one fiber-optic connector or fiber-optic connector adaptor for coupling two fiber-optic connectors.

13. The fiber-optic apparatus (100) of claim 12, wherein the first and second portions are separated by a dividing wall (103), and the at least one fiber-optic connector or fiber-optic connector adaptor is configured to optically connect the one or more optical fibers (172) from the first fiber-optic cable (175) with one or more optical fibers (272) from the second fiber-optic cable (275) across the dividing wall (103).

14. The fiber-optic apparatus (100) of any preceding claim, wherein the apparatus (100) is weather sealed.

15. A tray (160) for use in a fiber-optic apparatus (100) comprising:
a first surface and a second surface, wherein the tray has an optical splitter portion (165) configured to retain one or more optical splitters (190) disposed upon the first surface and an optical fiber splice portion (169) configured to retain one or more optical fiber splices (180) disposed upon the second surface.
